# EUROPEAN PATENT APPLICATION

(11) **EP 4 494 533 A1**
(43) Date of publication of application: **22.01.2025**
(21) Application number: 22939418.4
(22) Date of filing: 29.04.2022
(51) Int. Cl.: A47J 37/06

(54) **COOKING APPLIANCE**

(30) Priority: 24.04.2022 CN 202210435162
(71) Applicant: Guangdong Midea Consumer Electric Manufacturing Co., Ltd., Foshan, Guangdong 528311 (CN)
(72) Inventor: XU, Zhibo, Foshan, Guangdong 528311 (CN); YAO, Liang, Foshan, Guangdong 528311 (CN); ZHANG, Mamei, Foshan, Guangdong 528311 (CN); HUANG, Guojing, Foshan, Guangdong 528311 (CN); GUO, Yuanjiu, Foshan, Guangdong 528311 (CN); DU, Zujing, Foshan, Guangdong 528311 (CN); PEI, Shengzhao, Foshan, Guangdong 528311 (CN)
(74) Representative: Ran, Handong
(86) International application number: PCT/CN2022/090788
(87) International publication number: WO 2023/206574

(57) **Abstract**

A cooking appliance, relating to the technical field of household electrical appliances. The cooking appliance comprises a housing (100) and a heat-dissipation assembly (400); the housing (100) has a rear side (130), and a first side (140) and a second side (150) that are adjacent to the rear side (130); the first side (140) and the second side (150) are located on two opposite sides of the housing (100); an air inlet (142a) is formed on the first side (140); an air outlet (152a) is formed on the second side (150); a heat-dissipation channel (160) is provided in the housing (100), and is respectively communicated with the air inlet (142a) and the air outlet (152a); the heat-dissipation assembly (400) is disposed in the heat-dissipation channel (160); and the heat-dissipation assembly (400) can discharge the air outside the housing (100) from the air inlet (142a) to the outside of the air outlet (152a) by means of the heat-dissipation channel (160).

## Description

### CROSS-REFERENCE TO RELATED APPLICATION

This application claims priority to Chinese Patent Application No. 202210435162.2, titled "COOKING APPLIANCE", filed on April 24, 2022, the entire contents of which are incorporated herein by reference.

### FIELD

The present application belongs to the technical field of household electrical appliances, and in particular, relates to a cooking appliance.

### BACKGROUND

An air fryer is a machine that may use air to "fry", and mainly uses the air to replace an originally hot oil in a frying pan to cook food. Meanwhile, the hot air also blows away moisture on a surface of the food, making a food material achieve an approximate effect of being fried.

In the related art, a heating member and a fan are provided in the air fryer. A hot gas is generated in the air fryer by the heating member, and is blown to the food material in the air fryer by the fan. Heat generated by the heating member causes an increase in a temperature of an outer casing of the air fryer. Therefore, it is necessary to provide a heat-dissipation air outlet, to cause heat inside the air fryer to be dissipated to outside of the air fryer. An arrangement position of the heat-dissipation air outlet is related to heat-dissipation efficiency of the air fryer.

### SUMMARY

The present application aims to at least solve a technical problem that a current air fryer is easily limited in heat dissipation to some extent. To this end, the present application provides a cooking appliance.

The cooking appliance according to embodiments of the present application includes a housing, an air inlet, an air outlet, a heat-dissipation channel, and a heat-dissipation assembly. The housing has a rear side, and a first side and a second side that are adjacent to the rear side. The first side and the second side are located at two opposite sides of the housing. The air inlet is formed at the first side. The air outlet is formed at the second side. The heat-dissipation channel is disposed in the housing and in communication with the air inlet and the air outlet. The heat-dissipation assembly is disposed in the heat-dissipation channel. The heat-dissipation assembly is configured to discharge a gas outside the housing out of the air outlet from the air inlet via the heat-dissipation channel.

In the cooking appliance according to the embodiments of the present application, the housing has the rear side, and the first side and the second side that are adjacent to the rear side. The air inlet of the housing is formed at the first side of the housing, and the air outlet of the housing may be formed at the second side of the housing. When the cooking appliance of the present application is placed in an indoor space, in order to make full use of the indoor space and keep the cooking appliance stable, the housing of the cooking appliance may abut against a wall surface. Since the air inlet and air outlet of the housing are respectively disposed at the first side and the second side of the housing, the air inlet and air outlet of the housing are not blocked by the wall surface. In this way, the heat-dissipation assembly may sufficiently suck a normal-temperature gas or a cold gas outside the housing into the heat-dissipation channel of the housing from the air inlet of the housing, and sufficiently discharge a hot gas in the heat-dissipation channel out of the housing from the air outlet of the housing, to cause the cooking appliance to have good heat-dissipation performance.

In some implementations, each of an angle between an orientation of the air inlet and the rear side and an angle between the orientation of the air inlet and the first side is smaller than 90 degrees. Each of an angle between an orientation of the air outlet and the rear side and an angle between the orientation of the air outlet and the second side is smaller than 90 degrees.

In some implementations, the first side includes a first side section and a first transition section. The first side section is connected to the rear side through the first transition section. The first transition section includes at least one of a fillet transition and a chamfer transition. The air inlet is at least partially disposed at the first transition section.

In some implementations, the second side includes a second side section and a second transition section. The second side section is connected to the rear side through the second transition section. The second transition section includes at least one of the fillet transition and the chamfer transition. The air outlet is at least partially disposed at the second transition section.

In some implementations, the first transition section is spaced apart from the second transition section by a first spacing. The first side is spaced apart from the second side by a second spacing. The first spacing is smaller than the second spacing.

In some implementations, the cooking appliance further includes a heating assembly and an inner casing. The inner casing is disposed in the housing. A gap is formed between the inner casing and the housing. The heat-dissipation channel is located in the gap. The inner casing has a cooking cavity for accommodating a food material. The heating assembly is disposed in the housing to heat the food material in the cooking cavity.

In some implementations, the heat-dissipation assembly includes a driver and a first fan blade connected to the driver. The heat-dissipation channel is located between the inner casing and an inner wall of the rear side. The first fan blade is a centrifugal fan blade, and an axial direction of the first fan blade is perpendicular to the rear side.

In some implementations, the heat-dissipation channel includes an air inlet section and an air outlet section in communication with the air inlet section. The air inlet section is in communication with the air inlet. The air outlet section is in communication with the air outlet. The first fan blade is disposed in the air outlet section, and the first fan blade has an air inlet side facing towards the air inlet section.

In some implementations, the cooking appliance further includes a partition. The partition is disposed in the cooking cavity to divide the cooking cavity into a first inner cavity and a second inner cavity. The first inner cavity is superposed on the second inner cavity. The heating assembly includes a first heating portion and a second heating portion. The first heating portion is configured to heat the first cavity. The second heating portion is configured to heat the second cavity. Two heat-dissipation assemblies are provided. The two heat-dissipation assemblies cooperate with the first heating portion and the second heating portion, respectively.

In some implementations, the two heat-dissipation assemblies, two air inlets, and two air outlets are provided. The two heat-dissipation assemblies correspond to the first inner cavity and the second inner cavity, respectively. The two air inlets correspond to the two heat-dissipation assemblies, respectively. The two air outlets correspond to the two heat-dissipation assemblies, respectively.

In some implementations, the first heating portion includes a second fan blade and a first heat producing element. The driver of the heat-dissipation assembly of the two heat-dissipation assemblies corresponding to the first inner cavity is connected to the second fan blade. The second fan blade is located in the first inner cavity, and the first heat producing element is disposed in the first inner cavity. The second heating portion includes a third fan blade and a second heat producing element. The driver of the heat-dissipation assembly of the two heat-dissipation assemblies corresponding to the second inner cavity is connected to the third fan blade. The third fan blade is located in the second inner cavity, and the second heat producing element is disposed in the first inner cavity.

In some implementations, the cooking appliance further includes a heat insulation portion. The partition has a cavity, and the heat insulation portion is disposed in the cavity.

### BRIEF DESCRIPTION OF THE DRAWINGS

In order to clearly explain technical solutions of embodiments of the present application, drawings needed to be used in description of the embodiments are briefly described below. Obviously, the drawings as described below are some embodiments of the present application. Based on these drawings, other drawings can be obtained by those skilled in the art without making creative efforts.
FIG. 1 illustrates a schematic structural view of a cooking appliance according to an embodiment of the present application.
FIG. 2 illustrates a schematic view of an air inlet in FIG. 1.
FIG. 3 illustrates a schematic view of an air outlet in FIG. 1.
FIG. 4 illustrates a schematic structural view of a heat-dissipation assembly being mounted in a heat-dissipation channel in FIG. 1.
FIG. 5 illustrates a schematic view of an overall structure of a cooking appliance of the present application.
FIG. 6 illustrates a schematic view of an overall structure of a first heating portion and a second heating portion in FIG. 1.
FIG. 7 illustrates a schematic structural view of a second fan blade and a third fan blade in FIG. 1.
FIG. 8 illustrates a schematic view of an internal structure of a partition in FIG. 1.

### Reference numerals:

100-housing, 110-first inner cavity, 120-second inner cavity, 130-rear side, 140-first side, 141-first side section, 142-first transition section, 142a-air inlet, 150-second side, 151-second side section, 152-second transition section, 152a-air outlet, 160-heat-dissipation channel, 161-air inlet section, 162-air outlet section, 170-tray,
200-inner casing,
300-partition, 310-heat insulation portion,
400-heat-dissipation assembly, 410-driver, 420-first fan blade,
510-second fan blade, 520-first heat producing element,
610-third fan blade, 620-second heat producing element,
700-door sheet.

### DETAILED DESCRIPTION

Technical solutions of embodiments of the present application will be described clearly and completely below in combination with accompanying drawings according to the embodiments of the present application. Obviously, the embodiments described below are merely a part of the embodiments of the present application, rather than all embodiments of the present application. Based on the embodiments of the present application, other embodiments obtained by those skilled in the art without making creative efforts shall fall within scope of the present application.

It should be noted that, all directional indications in the embodiments of the present application are only configured to explain a relative position relationship, a motion situation, etc. between components in a certain specific posture. When the specific posture changes, the directional indications also change accordingly.

In the present application, unless otherwise clearly specified and limited, terms such as "connect", "connect to", "fix" and the like should be understood in a broad sense. For example, it may be a fixed connection or a detachable connection or connection as one piece; a mechanical connection or an electrical connection; a direct connection or an indirect connection through an intermediate; internal communication of two components or an interaction relationship between two components. For those of ordinary skill in the art, the specific meaning of the above terms in the present application should be understood according to specific circumstances.

In addition, descriptions related to terms "first" and "second" in the present application are only used for descriptive purposes, and cannot be understood as indicating or implying relative importance or implicitly indicating the number of indicated technical features. Therefore, features associated with "first" and "second" may explicitly or implicitly include at least one of the features. In addition, the technical solutions between the various embodiments may be combined with each other, but must be based on those of ordinary skill in the art. Further, when the combination of the technical solutions is contradictory or cannot be implemented, it should be regarded that the combination of the technical solutions does not exist, nor is within the scope of the present application.

The present application is described below with reference to specific embodiments in conjunction with the accompanying drawings:

### First embodiment

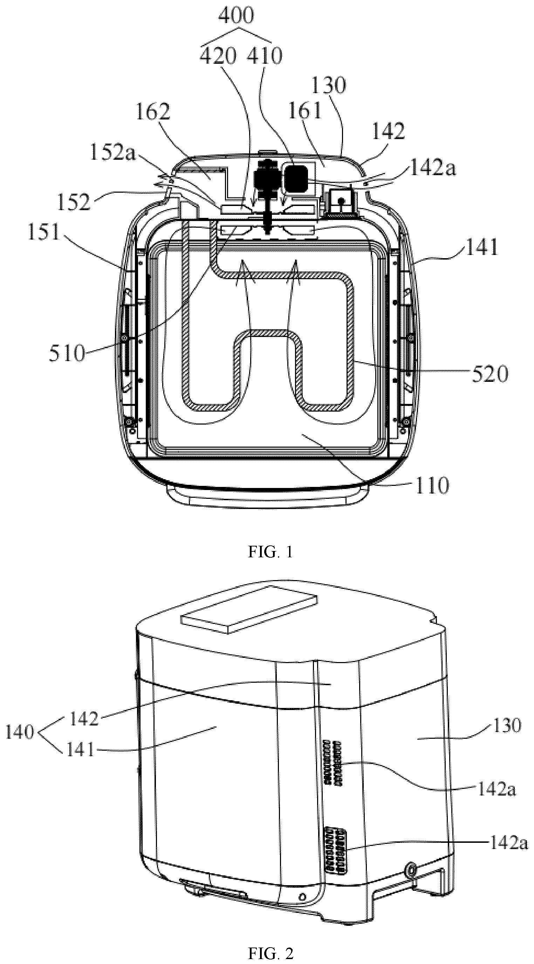

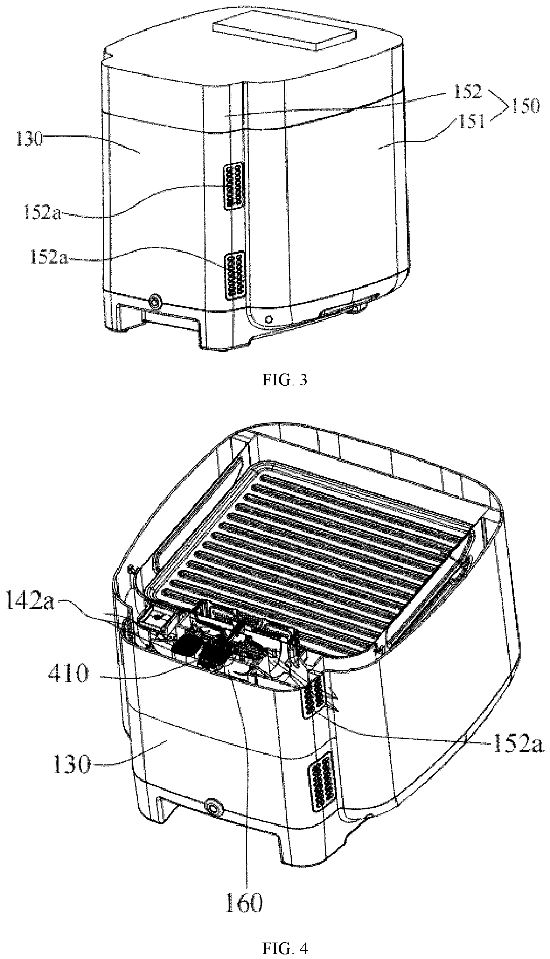

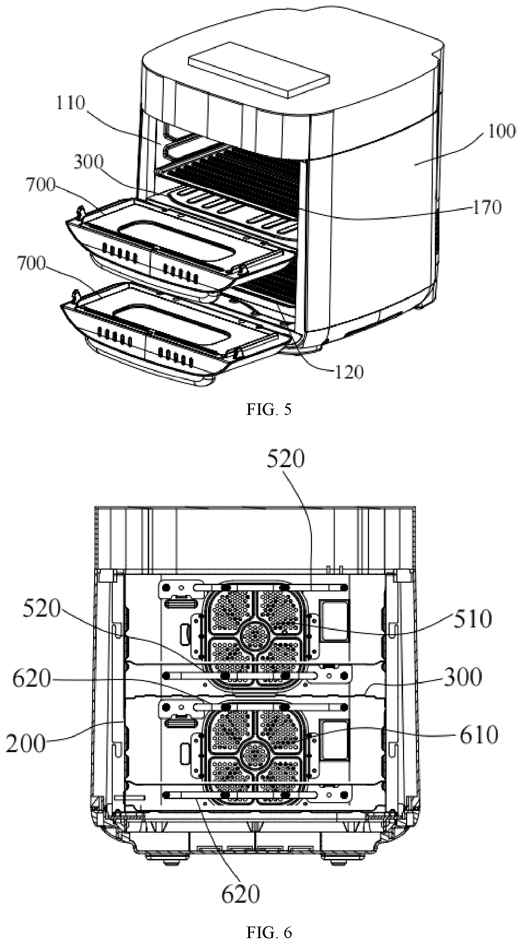

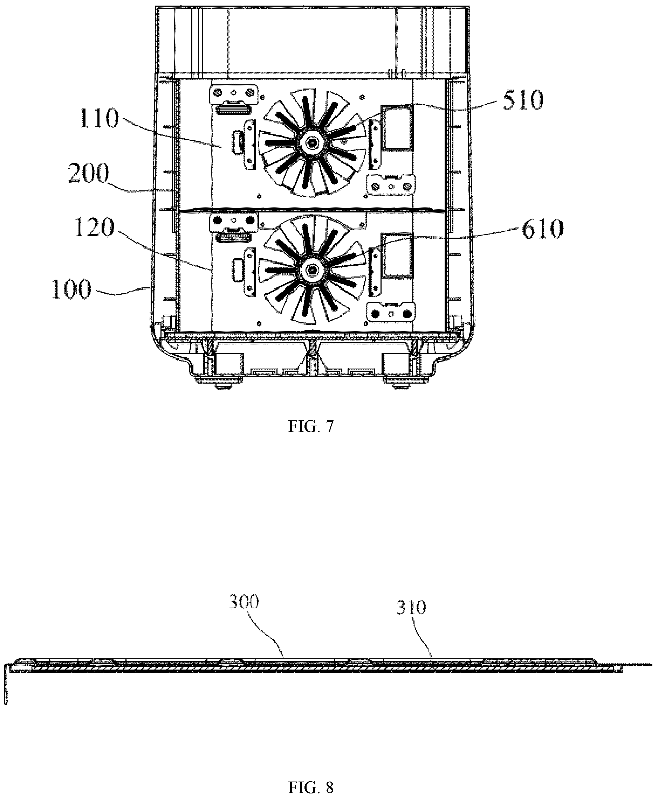

Referring to FIG. 1 to FIG. 8, the embodiments of the present application disclose a cooking appliance, including a housing 100 and a heat-dissipation assembly 400. The cooking appliance may be applied in cooking devices such as an air fryer, an oven, and a microwave oven.

The housing 100 is a basic component of the cooking appliance of the present application. The housing 100 may provide a mounting base for at least some of the other components of the cooking appliance, and may also achieve a purpose of protecting at least some of the other components in the housing 100. The housing 100 may also provide a cooking cavity for a food material to be cooked.

Since the cooking appliance needs to heat the food material during cooking of the food material, a high-temperature environment occurs inside the housing 100 of the cooking appliance, and a temperature of the housing 100 also increases correspondingly. In order to prevent a too high temperature of the housing 100 from damaging electrical components of the cooking appliance, and to prevent a too high temperature of a surface of the housing 100 from scalding a user, the housing 100 is provided with an air inlet 142a and an air outlet 152a, and is internally provided with a heat-dissipation channel 160. The heat-dissipation channel 160 in the housing 100 is in communication with both the air inlet 142a and the air outlet 152a of the housing 100. A normal-temperature gas or a cold gas outside the housing 100 may enter the heat-dissipation channel 160 in the housing 100 from the air inlet 142a of the housing 100, and may absorb heat in the housing 100 and is discharged to outside of the housing 100 from the air outlet 152a of the housing 100, to achieve a heat dissipation purpose in the housing 100, preventing a temperature of a part of the housing 100 except for the cooking cavity from being too high.

The heat-dissipation assembly 400 is disposed in the heat-dissipation channel 160 of the housing 100. The heat-dissipation assembly 400 may suck the normal-temperature gas or the cold gas outside the housing 100 into the heat-dissipation channel 160 from the air inlet 142a of the housing 100. The normal-temperature gas or the cold gas in the heat-dissipation channel 160 may become a hot gas after absorbing the heat in the housing 100, and the heat-dissipation assembly 400 may discharge the hot gas to the outside of the housing 100 from the air outlet 152a of the housing 100.

The housing 100 has a rear side 130. When the cooking appliance of the present application is placed in an indoor space, in order to make full use of the indoor space, the rear side 130 of the cooking appliance may abut with an indoor wall surface. In this way, waste of the indoor space can be prevented. Meanwhile, the wall surface may support the cooking appliance by abutting with the rear side 130 of the cooking appliance, making the cooking appliance be kept stable.

The housing 100 also has a first side 140 and a second side 150. Both the first side 140 and the second side 150 of the housing 100 are adjacent to the rear side 130 of the housing 100. Moreover, the first side 140 and the second side 150 are located at two opposite sides of the housing 100. In this way, neither the first side 140 of the housing 100 nor the second side 150 of the housing 100 are blocked by the wall surface when the rear side 130 of the housing 100 abuts with the wall surface. The air inlet 142a and the air outlet 152a of the housing 100 may be disposed at the first side 140 and the second side 150 of the housing 100, respectively. In this way, when the rear side 130 of the housing 100 abuts with the wall surface, the air inlet 142a and the air outlet 152a of the housing 100 are not blocked by the wall surface, enabling the normal-temperature gas or the cold gas outside the housing 100 to sufficiently enter the heat-dissipation channel 160 in the housing 100 from the air inlet 142a of the housing 100, and enabling the hot gas in the heat-dissipation channel 160 to be sufficiently discharged to the outside of the housing 100 from the air outlet 152a of the housing 100.

When the rear side 130 of the housing 100 abuts with the wall surface, the heat-dissipation assembly 400 may sufficiently suck the normal-temperature gas or the cold gas outside the housing 100 into the heat-dissipation channel 160 of the housing 100 from the air inlet 142a of the housing 100, and sufficiently discharge the hot gas inside the heat-dissipation channel 160 out of the housing 100 from the air outlet 152a of the housing 100. In this way, the cooking appliance can still have a good heat-dissipation effect in a case where the cooking appliance is mounted and arranged compactly and reasonably.

In the cooking appliance according to the embodiments of the present application, the housing 100 has the rear side 130, and the first side 140 and the second side 150 that are adjacent to the rear side 130. The air inlet 142a of the housing 100 is formed at the first side 140 of the housing 100, and the air outlet 152a of the housing 100 is formed at the second side 150 of the housing 100. When the cooking appliance of the present application is placed in the indoor space, in order to make full use of the indoor space and to keep the cooking appliance stable, the housing 100 of the cooking appliance may abut against the wall surface. Since the air inlet 142a and the air outlet 152a of the housing 100 are respectively disposed at the first side 140 and the second side 150 of the housing 100, the air inlet 142a and the air outlet 152a of the housing 100 are not blocked by the wall surface. In this way, the heat-dissipation assembly 400 may sufficiently suck the normal-temperature gas or the cold gas outside the housing 100 into the heat-dissipation channel 160 of the housing 100 from the air inlet 142a of the housing 100, and sufficiently discharge the hot gas in the heat-dissipation channel 160 out of the housing 100 from the air outlet 152a of the housing 100, to cause the cooking appliance to have good heat-dissipation performance.

In some implementations, in order to make full use of the indoor space when the cooking appliance of the present application is placed in an indoor environment, the cooking appliance may be placed at an indoor wall corner. In this way, a space at the indoor wall corner can be fully utilized, and two wall surfaces of the wall corner may abut with the housing 100 simultaneously, making the housing 100 more stable.

When the cooking appliance is placed at the wall corner, at least two sides of the housing 100 abut with the wall surface. In an exemplary embodiment of the present application, the rear side 130 and the first side 140 of the housing 100 may abut with the wall surface. Therefore, in order to prevent the air inlet 142a formed at the first side 140 of the housing 100 from being blocked by the wall surface, in the present application, an angle between an opening direction of the air inlet 142a and the rear side 130 is smaller than 90 degrees. In this way, when the rear side 130 of the housing 100 abuts with the wall surface, the air inlet 142a does not directly face towards the wall surface, enabling the air inlet 142a not to be blocked by the wall surface. An angle between the opening direction of the air inlet 142a and the first side 140 is also set to be smaller than 90 degrees. In this way, when the first side 140 of the housing 100 abuts with the wall surface, the air inlet 142a does not directly face towards the wall surface, enabling the air inlet 142a not to be blocked by the wall surface either.

In an exemplary embodiment of the present application, the first side 140 of the housing 100 of the present application may be configured to include a first side section 141 and a first transition section 142. The first side section 141 of the first side 140 is connected to the rear side 130 of the housing 100 through the first transition section 142. The first transition section 142 may be provided as a fillet transition, a chamfer transition, or a combination structure of the fillet transition and the chamfer transition. In this way, when the cooking appliance is placed at the wall corner, the rear side 130 and the first side section 141 of the housing 100 may abut with two adjacent wall surfaces, respectively. Since the first transition section 142 includes at least one of the fillet transition and the chamfer transition, the first transition section 142 may be spaced apart from the wall corner by a predetermined gap, enabling the first transition section 142 not to be completely blocked by the wall surface.

At least part of the air inlet 142a of the housing 100 may be formed at the first transition section 142, to ensure that the normal-temperature gas or the cold gas outside the housing 100 may enter the heat-dissipation channel 160 of the housing 100 from at least the part of the air inlet 142a located at the first transition section 142. In this way, when the cooking appliance of the present application is placed at the wall corner, the heat-dissipation assembly 400 may still allow the normal-temperature gas or the cold gas outside the housing 100 to enter the heat-dissipation channel 160 of the housing 100.

In other embodiment of the present application, it should be noted that when the cooking appliance is placed at the wall corner, the at least two sides of the housing 100 abut with the wall surface. In an exemplary embodiment of the present application, the rear side 130 and the second side 150 of the housing 100 may also abut with the wall surface. Therefore, in order to prevent the air outlet 152a formed at the second side 150 of the housing 100 from being blocked by the wall surface, in the present application, an angle between an opening direction of the air outlet 152a and the rear side 130 is smaller than 90 degrees. In this way, when the rear side 130 of the housing 100 abuts with the wall surface, the air outlet 152a does not directly face towards the wall surface, enabling the air outlet 152a not to be blocked by the wall surface. An angle between the opening direction of the air outlet 152a and the second side 150 is also set to be smaller than 90 degrees. In this way, when the second side 150 of the housing 100 abuts with the wall surface, the air outlet 152a does not directly face towards the wall surface, enabling the air outlet 152a not to be blocked by the wall surface either.

In an exemplary embodiment of the present application, the second side 150 of the housing 100 of the present application may be configured to include a second side section 151 and a second transition section 152. The second side section 151 of the second side 150 is connected to the rear side 130 of the housing 100 through the second transition section 152. The second transition section 152 may be provided as the fillet transition, the chamfer transition, or the combination structure of the fillet transition and the chamfer transition. In this way, when the cooking appliance is placed at the wall corner, the rear side 130 and the second side section 151 of the housing 100 may abut with two adjacent wall surfaces, respectively. Since the second transition section 152 includes at least one of the fillet transition and the chamfer transition, the second transition section 152 may be spaced apart from the wall corner by a predetermined gap, enabling the second transition section 152 not to be completely blocked by the wall surface.

At least part of the air outlet 152a of the housing 100 may be formed at the second transition section 152, to ensure that the hot gas in the heat-dissipation channel 160 of the housing 100 may be discharged to the outside of the housing 100 from at least the part of the air outlet 152a located at the second transition section 152. In this way, when the cooking appliance of the present application is placed at the wall corner, the heat-dissipation assembly 400 may allow the hot gas in the heat-dissipation channel 160 of the housing 100 to be discharged to the outside of the housing 100.

In some implementations, the first side 140 of the housing 100 of the present application may be provided with the first transition section 142, and the second side 150 of the housing 100 of the present application may be provided with the second transition section 152. The air inlet 142a and the air outlet 152a of the housing 100 may be at least partially formed at the first transition section 142 and the second transition section 152, respectively. In this way, when the cooking appliance of the present application is placed in an indoor groove-shaped space, each of the rear side 130, the first side 140, and the second side 150 of the cooking appliance may abut with the wall surface. In this way, the cooking appliance can be made more stable when placed in the indoor space, and the groove-shaped space can also achieve a purpose of protecting the cooking appliance.

The air inlet 142a and the air outlet 152a of the housing 100 may be formed at the first transition section 142 and the second transition section 152, respectively. In this way, the air inlet 142a and the air outlet 152a of the housing 100 are both not completely blocked by the wall surface, enabling the normal-temperature gas or the cold gas outside the housing 100 to be sucked by the heat-dissipation assembly 400 into the heat-dissipation channel 160 of the housing 100 from the air inlet 142a of the housing 100, and enabling the hot gas in the heat-dissipation channel 160 to be discharged by the heat-dissipation assembly 400 to the outside of the housing 100 from the air outlet 152a of the housing 100.

In addition, it should also be noted that when each of the first chamfer section 142 and the second chamfer section 152 is at least one of the fillet transition and the chamfer transition, or one of the first chamfer section 142 and the second chamfer section 152 is at least one of the fillet transition and the chamfer transition, the first chamfer section 142 is spaced apart from the second chamfer section 152 by a first spacing, and the first side section 141 is spaced apart from the second side section 151 by a second spacing. The first spacing is smaller than the second spacing. In this way, it can be ensured that the air inlet 142a and the air outlet 152a that are respectively formed at the first chamfer section 142 and the second chamfer section 152 are not blocked by the wall surface.

In some implementations, the heat-dissipation assembly 400 of the present application may be configured to include a driver 410 and a first fan blade 420. The first fan blade 420 is connected to the driver 410. The driver 410 may drive the first fan blade 420 to rotate. The first fan blade 420 rotates to generate wind power to suck the normal-temperature gas or the cold gas outside the housing 100 into the heat-dissipation channel 160 of the housing 100 from the air inlet 142a of the housing 100, and to discharge the hot gas in the heat-dissipation channel 160 to the outside of the housing 100 from the air outlet 152a of the housing 100.

It should be understood that the driver 410 also generates heat when driving the first fan blade 420 to rotate. Since the driver 410 is disposed in the heat-dissipation channel 160, the heat generated by the driver 410 is diffused into the heat-dissipation channel 160. When the first fan blade 420 rotates, the heat generated by the driver 410 may be discharged to the outside of the housing 100 from the air outlet 152a of the housing 100, to achieve a purpose of dissipating the heat of the driver 410. In this way, the heat-dissipation assembly 400 of the present application can be made more stable and reliable.

In some implementations, in order to heat a food material in the cooking cavity of the housing 100, the cooking appliance of the present application may also be provided with a heating assembly. The heating assembly may be disposed in the housing 100, and may be configured to heat the cooking cavity of the housing 100, making the food material in the cooking cavity be heated to complete the cooking process.

In an exemplary embodiment of the present application, the cooking appliance of the present application further includes an inner casing 200. The inner casing 200 is disposed in the housing 100 and has a cavity, i.e., the cooking cavity of the cooking appliance. The food material to be cooked may be placed in the cooking cavity of the inner casing 200 for cooking, and the heating assembly may heat the food material in the inner casing 200, which enables the food material in the inner casing 200 to be heated for completing cooking. A gap may be formed between the inner casing 200 and the housing 100, making the inner casing 200 not in completely direct contact with the housing 100. In this way, heat in the inner casing 200 after being dissipated to a surface of the inner casing 200 is prevented from being directly conducted to the housing 100, to achieve a purpose of reducing a temperature of the surface of the housing 100.

The heat-dissipation channel 160 in the housing 100 may be disposed between the housing 100 and the inner casing 200. Correspondingly, the heat-dissipation assembly 400 is located between the housing 100 and the inner casing 200. In this way, the heat-dissipation assembly 400 may suck the normal-temperature gas or the cold gas outside the housing 100 into the gap between the housing 100 and the inner casing 200 from the air inlet 142a of the housing 100, and discharge a hot gas located in the gap between the housing 100 and the inner casing 200 to the outside of the housing 100 from the air outlet 152a of the housing 100.

In an exemplary embodiment of the present application, the driver 410 of the heat-dissipation assembly 400 may adopt a motor, and a rotary shaft of the driver 410 may be configured to pass through the inner casing 200 and extend into the cooking cavity of the inner casing 200. The second fan blade 510 is connected to the rotary shaft of the driver 410. In this way, the driver 410 may drive the first fan blade 420 and the second fan blade 510 to rotate simultaneously. In addition, the first fan blade 420 may achieve a purpose of dissipating the heat of the cooking appliance, and the second fan blade 510 may achieve a purpose of heating the food material in the cooking cavity of the inner casing 200. The first fan blade 420 and the second fan blade 510 are driven by one driver 410 to rotate simultaneously, which can reduce a quantity of parts of the cooking appliance of the present application, making a structure of the cooking appliance simpler and more compact.

In some implementations, the heat-dissipation channel 160 of the present application may be disposed between the inner casing 200 and a side wall of the rear side 130 of the housing 100. In this way, the heat-dissipation channel 160 is entirely close to the rear side 130 of the housing 100. Correspondingly, the air inlet 142a of the housing 100 may be formed at a part of the first side 140 of the housing 100 close to the rear side 130, and the air outlet 152a of the housing 100 may be formed at a part of the second side 150 of the housing 100 close to the rear side 130, which makes the heat-dissipation channel 160 of the housing 100 entirely adjacent to the rear side 130 of the housing 100, and further makes the structure of the cooking appliance of the present application more compact.

The first fan blade 420 may use a centrifugal fan blade. In this way, the heat-dissipation assembly 400 is a centrifugal fan. An air inlet direction of the centrifugal fan is along its axial side, while an air outlet direction of the centrifugal fan is along its circumferential side, enabling a gas to be discharged from circumferential parts of the centrifugal fan. Therefore, when the first fan blade 420 is disposed in the heat-dissipation channel 160 of the housing 100, an air outlet side of the first fan blade 420 may be in communication with the air outlet 152a of the housing 100 and disconnected from the air inlet 142a of the housing 100, enabling a gas discharged in an axial direction of the first fan blade 420 only to be discharged from the air outlet 152a of the housing 100. An air inlet side of the first fan blade 420 may be in communication with the air inlet 142a of the housing 100 and disconnected from the air outlet 152a of the housing 100. In this way, a circumferential air outlet side of the centrifugal fan blade can be prevented from blowing the hot gas inside the heat-dissipation channel to the air inlet 142a of the housing 100, enabling the normal-temperature gas or the cold gas outside the housing 100 to sufficiently enter the housing 100 from the air inlet 142a of the housing 100.

In an exemplary embodiment of the present application, the heat-dissipation channel 160 in the housing 100 may be configured to include an air inlet section 161 and an air outlet section 162. The air inlet section 161 is in communication with the air outlet section 162. Moreover, the air inlet section 161 is in communication with the air inlet 142a of the housing 100, and the air outlet section 162 is in communication with the air outlet 152a of the housing 100. The first fan blade 420 may be disposed in the air outlet section 162. In this way, the air outlet side of the first fan blade 420 is also located in the air outlet section 162, and the gas discharged by the first fan blade 420 may enter the air outlet section 162 and be discharged from the air outlet 152a in communication with the air outlet section 162. The air inlet side of the first fan blade 420 may be configured to face towards the air inlet section 161. In this way, the first fan blade 420 may suck the gas in the air inlet section 161 into the air outlet section 162, making the air inlet section 161 in a negative-pressure environment. Correspondingly, the gas located outside the housing 100 may be sucked into the air inlet section 161 from the air inlet 142a of the housing 100.

It should also be noted that when the first fan blade 420 uses the centrifugal fan blade, the axial direction of the first fan blade 420 may be provided perpendicular to the rear side 130 of the housing 100. In this way, the first fan blade 420 may be laid flat in the heat-dissipation channel 160, which eliminates the need for an additional protrusion structure on the surface of the housing 100 to mount the first fan blade 420, and further achieves a purpose of making the structure of the cooking appliance of the present application more compact.

In other implementations, the first fan blade 420 of the present application may also use an axial-flow fan blade. In this way, the heat-dissipation assembly 400 is an axial-flow fan. An air outlet side and an air inlet side of the axial-flow fan are located at two opposite sides of a fan blade of the axial-flow fan. Therefore, the first fan blade 420 may be disposed between the air inlet 142a and the air outlet 152a of the housing 100, and the air inlet 142a and the air outlet 152a of the housing 100 are located at two opposite sides of the first fan blade 420, to cause the gas outside the housing 100 to be sucked from the air inlet 142a and cause the gas in the housing 100 to be discharged from the air outlet 152a. When the first fan blade 420 uses the axial-flow fan blade, the rotary shaft of the driver 410 may be configured to obliquely pass through the inner casing 200 and extend into the cooking cavity of the inner casing 200.

In some implementations, the cooking appliance of the present application may further be provided with a partition 300. The partition 300 may be disposed in the housing 100, and specifically disposed inside the inner casing 200. The partition 300 may divide the cooking cavity in the inner casing 200 into a first inner cavity 110 and a second inner cavity 120. In this way, the first inner cavity 110 and the second inner cavity 120 may be configured to accommodate the food material to be cooked. In an exemplary embodiment of the present application, different types of food material may be placed in the first inner cavity 110 and the second inner cavity 120. Therefore, such different types of food material can be cooked in the first inner cavity 110 and the second inner cavity 120, respectively, which can prevent the different types of food material from affecting each other during cooking. The first inner cavity 110 may be superposed on the second inner cavity 120, which makes a width of the cooking appliance of the present application relatively small, and further makes the structure of the cooking appliance more compact.

In addition, it should also be understood that the same type of food material may also be respectively placed in the first inner cavity 110 and the second inner cavity 120 of the inner casing 200, which can prevent the food material from being stacked in one inner cavity simultaneously. In this way, the food material dispersed in the first inner cavity 110 and the second inner cavity 120 can be heated more fully, to improve cooking efficiency of the cooking appliance of the present application.

In some implementations, the above-described heating assembly may heat the first inner cavity 110 and the second inner cavity 120, enabling the food material accommodated in the first inner cavity 110 and the second inner cavity 120 to be heated, thus achieving a purpose of cooking the food material. In other embodiments of the present application, the heating assembly may also separately heat the first inner cavity 110 or the second inner cavity 120. When the food material to be cooked are accommodated in the first inner cavity 110 or the second inner cavity 120, the heating assembly may separately heat the food material in the first inner cavity 110 or the food material in the second inner cavity 120, to achieve a purpose of reducing energy consumption of the cooking appliance of the present application.

In some implementations, in order to enable the heating assembly to simultaneously heat the first inner cavity 110 and the second inner cavity 120 of the housing 100, or separately heat the first inner cavity 110 or the second inner cavity 120 of the housing 100, the heating assembly of the present application may be configured to include a first heating portion and a second heating portion.

The housing 100 provides a mounting base for the first heating portion and the second heating portion, making both the first heating portion and the second heating portion disposed in the housing 100. The first heating portion may heat the first inner cavity 110, and thus may heat the food material accommodated in the first inner cavity 110, to achieve a purpose of cooking the food material in the first inner cavity 110. The second heating portion may heat the second inner cavity 120, and thus may heat the food material accommodated in the second inner cavity 120, to achieve a purpose of cooking the food material in the second inner cavity 120.

The first heating portion may control a temperature in the first inner cavity 110, making the temperature in the first inner cavity 110 variable. In this way, when different types of food materials are accommodated in the first inner cavity 110, the different types of food materials may have different cooking temperature requirements, and the first heating portion may control the temperature in the first inner cavity 110 to reach a temperature most suitable for cooking the food materials, making cooking effects of the food materials better. In addition, the second heating portion may control a temperature in the second inner cavity 120, making the temperature in the second inner cavity 120 variable. In this way, when different types of food materials are accommodated in the second inner cavity 120, the different types of food materials may have different cooking temperature requirements, and the second heating portion may control the temperature in the second inner cavity 120 to reach the temperature most suitable for cooking the food materials, making the cooking effects of the food materials better.

The first heating portion and the second heating portion control the temperature of the first inner cavity 110 and the temperature of the second inner cavity 120, respectively. Moreover, the first inner cavity 110 and the second inner cavity 120 are separated from and independent of each other. In this way, the first heating portion and the second heating portion may heat the food material in the first inner cavity 110 and the food material in the second inner cavity 120, respectively. In addition, the temperature of the first inner cavity 110 and the temperature of the second inner cavity 120 can be respectively adjusted to temperatures suitable for cooking different food materials. In an exemplary embodiment of the present application, different types of food materials may be respectively placed in the first inner cavity 110 and the second inner cavity 120 for simultaneous cooking, to improve the cooking efficiency of the cooking appliance of the present application.

In some implementations, the first heating portion of the present application may be configured to include a second fan blade 510 and a first heat producing element 520. The first heat producing element 520 may be disposed at a side of the first inner cavity 110 close to the rear side 130 of the housing 100. The second fan blade 510 is rotatable and may be disposed at the side of the first inner cavity 110 close to the rear side 130 of the housing 100. The first heat producing element 520 may generate heat after being powered on, to heat air in the first inner cavity 110, and an air outlet direction of the second fan blade 510 is directed towards the food material accommodated in the first inner cavity 110. The hot air may heat the food material, making moisture and oil in the food material seep from the food material. Wind power generated by the second fan blade 510 as it rotates may dry the moisture and oil on surface of the food material, to achieve a purpose of air-frying the food material. When the second fan blade 510 and the first heat producing element 520 are both disposed at the side of the first inner cavity 110 of the housing 100 close to the rear side 130 of the housing 100, the second fan blade 510 and the first heat producing element 520 may be arranged relatively close to each other. In this way, the second fan blade 510 can quickly blow the hot gas generated by the first heat producing element 520 to the food material to be cooked in the first inner cavity 110.

In an exemplary embodiment of the present application, when each of the second fan blade 510 and the first heat producing element 520 is disposed at the side of the first inner cavity 110 close to the rear side 130 of the housing 100, the first heat producing element 520 is located at an air outlet side of the second fan blade 510. The first inner cavity 110 has a first containing portion for accommodating the food material. The first heat producing element 520 is opposite to the first containing portion in the first inner cavity 110. Moreover, the air outlet direction of the second fan blade 510 is directed towards the first heat producing element 520 and the first containing portion. In this way, the second fan blade 510 may blow the hot air generated by the first heat producing element 520 to the first containing portion, making the hot air into contact with the food material accommodated on the first containing portion to achieve the purpose of cooking the food material.

In other implementations, two first heat producing elements 520 may also be provided. The two first heat producing elements 520 may be disposed at a bottom and a top of the first inner cavity 110, respectively. In this way, when the food material are placed in the first inner cavity 110, the two first heat producing elements 520 may respectively heat a bottom side and a top side of the food material, to achieve a purpose of sufficiently heating the food material.

In some implementations, the second heating portion of the present application may be configured to include a third fan blade 610 and a second heat producing element 620. The second heat producing element 620 may be disposed at a top of the second inner cavity 120, and the third fan blade 610 may be disposed at a side of the second inner cavity 120. In this way, the third fan blade 610 and the second heat producing element 620 may be distributed at different positions of the second inner cavity 120, to prevent the third fan blade 610 and the second heat producing element 620 from being concentrated at a predetermined position in the second inner cavity 120, making mounting of the third fan blade 610 and the second heat producing element 620 be facilitated.

The second heat producing element 620 may heat air in the second inner cavity 120, which makes an increase in the temperature of the second inner cavity 120, and further makes the food material accommodated in the second inner cavity 120 to be heated. Moisture and oil inside the food material accommodated in the second inner cavity 120 after the food material being heated may seep from the food material, and an air outlet direction of the third fan blade 610 may be directed towards the food material accommodated in the second inner cavity 120. In this way, wind power generated by the third fan blade 610 may blow off the oil and moisture seeping from the food material accommodated in the second inner cavity 120, enabling the oil and moisture seeping from the food material to be separated from the food material, to achieve a purpose of cooking the food material by air-frying.

In an exemplary embodiment of the present application, the second inner cavity 120 has a second containing portion for accommodating the food material, and the food material may be stacked at a predetermined height after being placed in the second containing portion. After the third fan blade 610 is disposed at the side of the second inner cavity 120, a direction of the wind power generated by the third fan blade 610 may be parallel to a bottom of the second inner cavity 120. In this way, the third fan blade 610 can blow wind towards a side of the food material accommodated on the second containing portion, and a purpose of separating the oil and moisture seeping from the surface of the food material from the food material can also be achieved. In other embodiments of the present application, the second heat producing element 620 and the third fan blade 610 may also be disposed at the same side of the second inner cavity 120. In this way, a purpose of heating the food material and separating the oil and moisture of the food material from the food material can also be achieved.

In some implementations, in order to make a heating and cooking effect of the food material in the second inner cavity 120 better, the second heating portion may be further configured to include two second heat producing elements 620. The two second heat producing elements 620 may be respectively disposed at a bottom and a top of the second inner cavity 120, and arranged opposite to each other. When the food material are accommodated in the second containing portion of the second inner cavity 120, the two second heat producing elements 620 may heat the bottom and top of the food material, respectively. In this way, the food material can be heated in multiple directions. Moreover, by providing the two second heat producing elements 620, the temperature in the second inner cavity 120 can reach a temperature required for cooking the food material more efficiently.

In some implementations, in order to make the structure of the cooking appliance of the present application more compact and to reduce the quantity of parts, two heat-dissipation assemblies 400 of the present application may be provided, and the two heat-dissipation assemblies 400 may be provided corresponding to the first inner cavity 110 and the second inner cavity 120, respectively. In addition, a driver 410 of the heat-dissipation assembly 400 corresponding to the first inner cavity 110 may be configured to be connected to the second fan blade 510, and the second fan blade 510 is located in the first inner cavity 110. In this way, the driver 410 can drive the first fan blade 420 and the second fan blade 510 to rotate simultaneously as it rotates.

In an exemplary embodiment of the present application, the driver 410 of the heat-dissipation assembly 400 may adopt the motor. A rotary shaft of one of drivers 410 may be configured to pass through the inner casing 200 and extend to the first inner cavity 110, and the second fan blade 510 is connected to the rotary shaft of the driver 410. In this way, the driver 410 can simultaneously drive the first fan blade 420 and the second fan blade 510 to rotate. In addition, the first fan blade 420 can achieve the purpose of dissipating the heat of the cooking appliance, and the second fan blade 510 can play a role in enabling the hot gas in the first inner cavity 110 to be flowable, enabling the hot gas to act on the food material in the first inner cavity 110. The first fan blade 420 and the second fan blade 510 are simultaneously driven by one driver 410 to rotate, which can reduce the quantity of parts of the cooking appliance of the present application, enabling the structure of the cooking appliance to become simpler and more compact.

A rotary shaft of another one of drivers 410 410 may be configured to pass through the inner casing 200 and extend to the second inner cavity 120, and the third fan blade 610 is connected to the rotary shaft of the driver 410. In this way, the driver 410 can simultaneously drive the first fan blade 420 and the third fan blade 610 to rotate. In addition, the first fan blade 420 can achieve the purpose of dissipating the heat of the cooking appliance, and the third fan blade 610 can play a role in enabling the hot gas in the second inner cavity 120 to be flowable, enabling the hot gas to act on the food material in the second inner cavity 120. The first fan blade 420 and the third fan blade 610 are simultaneously driven by one driver 410 to rotate, which can reduce the quantity of parts of the cooking appliance of the present application, enabling the structure of the cooking appliance to become simpler and more compact.

In addition, it should also be noted that by providing the two heat-dissipation assemblies 400, the heat inside the housing 100 may be more efficiently discharged to the outside of the housing 100. Correspondingly, two air inlets 142a and two air outlets 152a of the housing 100 may also be provided, the two air inlets 142a may correspond to the two heat-dissipation assemblies 400 respectively, and the two air outlets 152a may correspond to the two heat-dissipation assemblies 400 respectively.

In some implementations, in order to facilitate access to a food material in each of the first inner cavity 110 and the second inner cavity 120, the housing may be provided with an opening corresponding to each of the first inner cavity 110 and the second inner cavity 120 and a door sheet 700. The door sheet 700 may enable a first opening and a second opening to be openable or closable.

In some implementations, the partition 200 may also be provided as a heat insulation member. The partition 200 may be internally provided with a heat insulation cavity. The heat insulation cavity may be internally filled with heat insulation portions 210, and the heat insulation portions 210 may specifically use mica sheets, enabling the partition 200 to have good heat insulation performance. In this way, the first inner cavity 110 can be separated independently from the second inner cavity 120, and the heat in the first inner cavity 110 and the heat in the second inner cavity 120 can be prevented from affecting each other.

A tray 170 may also be disposed in each of the first inner cavity 110 and the second inner cavity 120 of the present application. The food material heated in each of the first inner cavity 110 and the second inner cavity 120 may be placed on the tray 170. In this way, the oil and moisture seeping from the food material in each of the first inner cavity 110 and the second inner cavity 120 after being air-fried fall onto the tray 170, to prevent the oil and moisture from being scattered to components in each of the first inner cavity 110 and the second inner cavity 120, making it more convenient for the user to clean the first inner cavity 110 and the second inner cavity 120.

In descriptions of the present application, descriptions with reference to the reference terms "an embodiment", "some embodiments", "examples", "specific examples", or "some examples" etc., mean that specific features, structure, materials, or characteristics described in conjunction with the embodiment or example are included in at least one embodiment or example of the present application. In this specification, the schematic representations of the above terms do not necessarily refer to the same embodiment or example. Moreover, the described specific features, structures, materials or characteristics may be combined in any one or more embodiments or examples in a suitable manner. In addition, those skilled in the art can combine the different embodiments or examples described in this specification.

## Claims

1. A cooking appliance, comprising:
a housing (100) having a rear side (130), and a first side (140) and a second side (150) that are adjacent to the rear side (130) and located at two opposite sides of the housing (100);
an air inlet (142a) formed at the first side (140);
an air outlet (152a) formed at the second side (150);
a heat-dissipation channel (160) disposed in the housing (100) and in communication with the air inlet (142a) and the air outlet (152a); and
a heat-dissipation assembly (400) disposed in the heat-dissipation channel (160), and configured to discharge a gas outside the housing (100) out of the air outlet (152a) from the air inlet (142a) via the heat-dissipation channel (160).

2. The cooking appliance according to claim 1, wherein:
each of an angle between an orientation of the air inlet (142a) and the rear side (130) and an angle between the orientation of the air inlet (142a) and the first side (140) is smaller than 90 degrees; and
each of an angle between an orientation of the air outlet (152a) and the rear side (130) and an angle between the orientation of the air outlet (152a) and the second side (150) is smaller than 90 degrees.

3. The cooking appliance according to claim 2, wherein:
the first side (140) comprises a first side section (141) and a first transition section (142);
the first side section (141) is connected to the rear side (130) through the first transition section (142);
the first transition section (142) comprises at least one of a fillet transition and a chamfer transition; and
the air inlet (142a) is at least partially disposed at the first transition section (142).

4. The cooking appliance according to claim 3, wherein:
the second side (150) comprises a second side section (151) and a second transition section (152);
the second side section (151) is connected to the rear side (130) through the second transition section (152);
the second transition section (152) comprises at least one of the fillet transition and the chamfer transition; and
the air outlet (152a) is at least partially disposed at the second transition section (152).

5. The cooking appliance according to claim 4, wherein:
the first transition section (142) is spaced apart from the second transition section (152) by a first spacing;
the first side (140) is spaced apart from the second side (150) by a second spacing; and
the first spacing is smaller than the second spacing.

6. The cooking appliance according to any one of claims 1 to 5, further comprising a heating assembly and an inner casing (200), wherein:
the inner casing (200) is disposed in the housing (100), a gap is formed between the inner casing (200) and the housing (100), and the heat-dissipation channel (160) is located in the gap;
the inner casing (200) has a cooking cavity for accommodating a food material; and
the heating assembly is disposed in the housing (100) to heat the food material in the cooking cavity.

7. The cooking appliance according to claim 6, wherein:
the heat-dissipation assembly (400) comprises a driver (410) and a first fan blade (420) connected to the driver (410);
the heat-dissipation channel (160) is located between the inner casing (200) and an inner wall of the rear side (130); and
the first fan blade (420) is a centrifugal fan blade, and an axial direction of the first fan blade (420) is perpendicular to the rear side (130).

8. The cooking appliance according to claim 7, wherein:
the heat-dissipation channel (160) comprises an air inlet section (161) and an air outlet section (162) in communication with the air inlet section (161), the air inlet section (161) is in communication with the air inlet (142a), and the air outlet section (162) is in communication with the air outlet (152a); and
the first fan blade (420) is disposed in the air outlet section (162), the first fan blade (420) having an air inlet side facing towards the air inlet section (161).

9. The cooking appliance according to claim 7 or 8, further comprising a partition (300), disposed in the cooking cavity to divide the cooking cavity into a first inner cavity (110) and a second inner cavity (120), wherein:
the first inner cavity (110) is superposed on the second inner cavity (120);
the heating assembly comprises a first heating portion and a second heating portion, the first heating portion is configured to heat the first cavity, and the second heating portion is configured to heat the second cavity; and
two heat-dissipation assemblies (400) are provided, the two heat-dissipation assemblies (400) cooperating with the first heating portion and the second heating portion, respectively.

10. The cooking appliance according to claim 9, wherein the two heat-dissipation assemblies (400), two air inlets (142a), and two air outlets (152a) are provided, wherein:
the two heat-dissipation assemblies (400) correspond to the first inner cavity (110) and the second inner cavity (120), respectively;
the two air inlets (142a) correspond to the two heat-dissipation assemblies (400), respectively; and
the two air outlets (152a) correspond to the two heat-dissipation assemblies (400), respectively.

11. The cooking appliance according to claim 10, wherein:
the first heating portion comprises a second fan blade (510) and a first heat producing element (520), the driver (410) of the heat-dissipation assembly (400) corresponding to the first inner cavity (110) is connected to the second fan blade (510), the second fan blade (510) is located in the first inner cavity (110), and the first heat producing element (520) is disposed in the first inner cavity (110); and
the second heating portion comprises a third fan blade (610) and a second heat producing element (620), the driver (410) of the heat-dissipation assembly (400) corresponding to the second inner cavity (120) is connected to the third fan blade (610), the third fan blade (610) is located in the second inner cavity (120), and the second heat producing element (620) is disposed in the first inner cavity (110).

12. The cooking appliance according to any one of claims 9 to 11, further comprising a heat insulation portion (310),
wherein the partition (300) has a cavity, and the heat insulation portion (310) is disposed in the cavity.
